(19) Europäisches Patentamt / European Patent Office / Office européen des brevets

(11) **EP 2 957 397 B1**

(12) **EUROPEAN PATENT SPECIFICATION**

(45) Date of publication and mention of the grant of the patent:
**17.05.2017 Bulletin 2017/20**

(51) Int Cl.:
**B25J 9/16** *(2006.01)*    **G01B 11/25** *(2006.01)*

(21) Application number: **15172776.5**

(22) Date of filing: **18.06.2015**

(54) **MEASUREMENT SYSTEM, OBJECT PICKUP SYSTEM, MEASUREMENT METHOD, AND CARRIER MEANS**

MESSSYSTEM, OBJEKTAUFNAHMESYSTEM, MESSVERFAHREN UND TRÄGERMITTEL

SYSTEME DE MESURE, SYSTEME DE CAPTURE D'OBJET, PROCEDE DE MESURE ET MOYENS DE TRANSPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014 JP 2014127235**
             **31.10.2014 JP 2014222987**

(43) Date of publication of application:
**23.12.2015 Bulletin 2015/52**

(73) Proprietor: **Ricoh Company, Ltd.**
**Tokyo 143-8555 (JP)**

(72) Inventor: **OUCHIDA, Shigeru**
**Tokyo, 143-8555 (JP)**

(74) Representative: **Leeming, John Gerard**
**J A Kemp**
**14 South Square**
**Gray's Inn**
**London WC1R 5JJ (GB)**

(56) References cited:
**EP-A2- 1 043 642       EP-A2- 2 636 493**
**JP-A- H11 333 770      US-A1- 2007 009 150**
**US-A1- 2013 127 998**

## Description

BACKGROUND

Technical Field

The present invention relates to a measurement system, an object pickup system including the measurement system, a measurement method, and a carrier medium.

Background Art

Various electronics parts and mechanical parts are manufactured by forming a target object called work, such as through pressing process, bending process, and punching process etc. Multiple pieces of work are carried in the state of being randomly piled up on a container such as a tray without being packaged, and picked up one by one from the container for processing. This system that picks up the work is called a picking system.

In the picking system, position, shape, and orientation such as inclination of the work are recognized, and the recognition result is passed to a controller. The controller controls an arm to pick up the work precisely. The picking system includes an image capture unit, a projecting unit, and a recognition unit for recognizing the feature of the work.

The image capture unit acquires an image by capturing the piled up work pieces and measures distance to the work. The projecting unit provides texture to the work if the work does not have local characteristics to measure the shape of the work precisely. The recognition unit uses the image acquired by the image capture unit, the measured distance, and the shape information of the work that the recognition unit itself owns, to recognize the position, shape, and orientation of the work, and provides the recognition result to the controller.

Conventionally, a technology that measures the shape precisely is known (e.g., JP-2001-091232-A). In the technology described above, by irradiating the target object that does not have the local characteristic with nonperiodic projecting pattern using random numbers to associate corresponding points assuredly, a precise shape can be measured by shooting the corresponding points using two cameras and calculating distance based on disparity between pixels.

As the work pieces are picked up one by one, the number of piled up work pieces decreases by one, and distance to the piled up work pieces changes gradually. Therefore, in the captured images, the projection pattern emitted by the projecting unit gets out of focus. In addition, the work that can be easily picked up is not limited to the top one that is irradiated with the focused projection pattern among the piled up work pieces. As a result, the out-of-focus projection pattern is emitted on the work that can be picked up easily.

It is desired to recognize the precise shape to pick up the work precisely. If the shape is recognized precisely, it becomes possible to recognize the precise position and orientation of the work. However, if the projection pattern is out of focus as described above, it is impossible to measure the shape of the work to be picked up, precisely. This may cause displacement in position and inclination, resulting in failure in picking such that productivity deteriorates. EP15172776, disclosing a robot that picks up articles from a pile based on measurements from a fixed camera and an on-robot projector and camera unit, bypasses this problem because the on-robot projector and camera unit is moved by the robot to acquire suitable images. To cope with the issue described above, a system that can measure the shape of the object such as the work precisely is desired to prevent from failure in picking and enhance the productivity.

SUMMARY

An example embodiment of the present invention provides a novel measurement system that includes an image capture unit that captures images of multiple objects from two or more angles that are different from each other, and calculates distances to the multiple objects based on the acquired two or more images, a memory that stores multiple shapes of the object that are acquired when viewed from a predetermined viewpoint while changing orientation of the multiple objects, as shape information, a selection unit that selects one object among the multiple objects based on the two or more images acquired by the image capture unit and the shape information, and a command unit that instructs a projection unit to emit a predetermined projection pattern focusing on the selected object using the distance to the selected object that is captured and calculated by the image capture unit. The image capture unit captures two or more images of the selected object on which the projection unit emits the projection pattern, and calculates distances to multiple points on the projection pattern included in the acquired two or more images to measure a shape of the selected object.

In the following embodiment, a novel measurement system that includes an image capture unit that captures images of multiple objects from equal to or more than different two angles and calculate distance to the object based on the acquired equal to or more than two images, a memory that stores multiple shapes of the object from a predetermined viewpoint changing orientation of the object as shape information, a selection unit that selects one object among the multiple objects based on the equal to or more than two images acquired by the image capture unit and the shape information, and a command unit that instructs a projection unit to emit a predetermined projection pattern focusing on the selected object using the distance to the object selected by the selection unit and captured and calculated by the image capture unit is provided. In the measurement system, the image capture unit captures images of the selected object on which the projection unit emits the projection pattern, and a shape of the selected object is measured by calculating distances to multiple points on the projection pattern included in the acquired equal to or more than two images.

Further example embodiments of the present invention provide an object pickup system, a measurement method, and a carrier medium.

With the above-described configuration, a shape of the object can be accurately measured. This prevents a failure in picking the object, thus increasing productivity.

BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.

FIG. 1 is a schematic diagram illustrating a picking system as an object picking up system as an embodiment of the present invention.
FIG. 2 is a diagram illustrating a hardware configuration of a measurement system included in the picking system in FIG. 1 as an embodiment of the present invention.
FIG. 3 is a diagram illustrating functional blocks of the measurement system in FIG. 2 as an embodiment of the present invention.
FIGS. 4A and 4B are diagrams illustrating shape information stored in the memory that the measurement system includes as an embodiment of the present invention.
FIGS. 5A, 5B, and 5C are diagrams illustrating an image captured by an image capture unit that the measurement system includes as an embodiment of the present invention.
FIG. 6 is a diagram illustrating distance calculated by the image capture unit as an embodiment of the present invention.
FIG. 7 is a diagram illustrating distance calculated by the image capture unit as an embodiment of the present invention.
FIG. 8 is a diagram illustrating projection pattern projected by the projecting unit as an embodiment of the present invention.
FIGS. 9A and 9B are diagrams illustrating a part of surface of the work that is irradiated with the projection pattern by the projecting unit as an embodiment of the present invention.
FIG. 10 is a flowchart illustrating a process that a picking system executes as an embodiment of the present invention.
FIG. 11 is a diagram illustrating relationship between distance and an exposure as an embodiment of the present invention.
FIG. 12 is a diagram illustrating relationship between distance and zooming power as an embodiment of the present invention.

DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

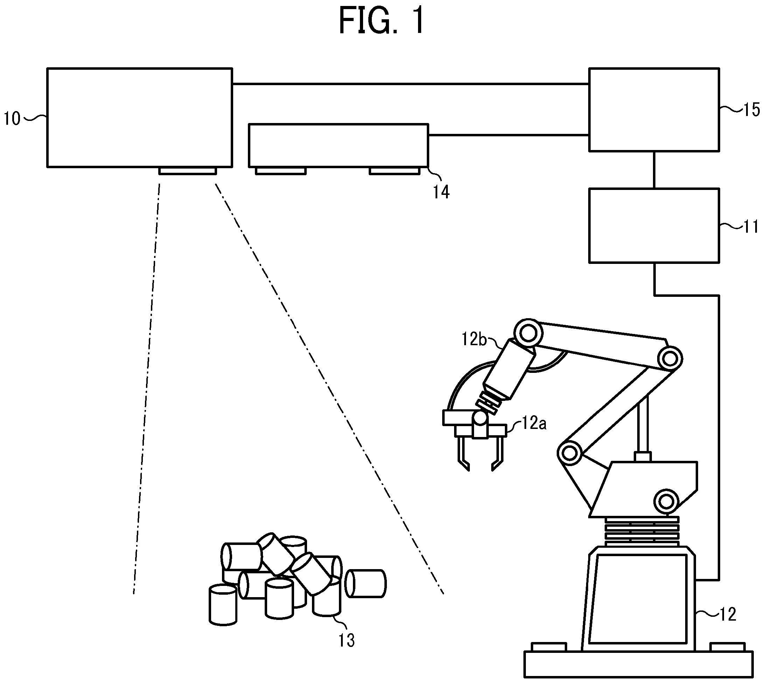

FIG. 1 is a schematic diagram illustrating a picking system as an object picking up system in this embodiment. The picking system in FIG. 1 includes a measurement system, a projecting apparatus 10, a controller 11, and a pickup apparatus 12 as an object pickup apparatus. In the picking system, multiple objects piled up randomly (i.e., piled up scrappily) are picked up, and the object is carried to a predetermined position and provided to a predetermined point. It is possible to provide the object to the place where the object is mounted. The object that the picking system picks up is referred to as a work 13 as a target object to be processed such as metal or resin.

An example of the projecting apparatus 10 is a projector and emits a predetermined projection pattern. The projecting apparatus 10 consists of a light source, a display panel such as a liquid crystal panel, and a projection lens. The display panel converts light from the light source into light that displays a predetermined pattern etc. on the surface of the target object, and the projection lens irradiates the target object with the converted light. In this case, LCD method that uses the liquid crystal panel is described. However, other methods can be adopted for the purpose described above.

The projecting apparatus 10 can emit a nonperiodic pattern called "random pattern" that can align precisely as a predetermined projection pattern to match equal to or more than two images acquired simultaneously. By emitting the random pattern described above, even with the work 13 that has no texture, by using the image capture apparatus 14 included in the measurement system, it is possible to acquire not only the shape data of edge parts of the work 13 but also the shape data of surfaces of the work 13.

The controller 11 controls the pickup apparatus 12 based on a recognition result that a recognition apparatus 15 included in the measurement system recognizes and outputs. Examples of the recognition results are data on position and orientation of the work 13 to be picked up and shape data of the work 13. By using this data described above, the controller 11 can determine various conditions of moving direction and speed of the work 13 and picking up the work 13.

The hardware configuration of the controlling unit and the controller 11 in the measurement system can be the same, and the hardware configuration is described later. The controller 11 can implement the control described above by storing a predetermined program and executing the program.

The pickup apparatus 12 includes a hand 12a including two fingers that clip the work 13 and support the clipped work 13 for recognizeing the work 13 and an arm 12b along with the hand 12 that moves the hand 12 to a predetermined position. The pickup apparatus 12 is controlled by the controller 11 so that the arm 12b is moved and the hand 12a is turned to recognize the same position of the work 13 always. As a result, the pickup apparatus 12 can mount the recognizeed work 13 on a position similarly in case of mounting the work 13 afterward, and that can enhance productivity.

In the above description, the pickup apparatus 12 includes the hand 12a including the two fingers. However, the hand 12a can include equal to or more than three fingers. Otherwise, it is possible that the work 13 is picked up by vacuuming up the work 13.

In FIG. 1, the measurement system does not include the projecting apparatus 10 described above. However, it is possible that the measurement system includes the projection apparatus 10 described above. The measurement system selects one work 13a among multiple work pieces 13 piled up randomly, measures the shape of the work 13, and outputs the shape of the work 13 along with the data on its position and orientation to the controller 11. The measurement system includes the image capture apparatus 14 and the recognition apparatus 15 described above for that purpose.

For example, a stereo camera can be used for the image capture apparatus 14, and the image capture apparatus 14 captures multiple work pieces 13 from different equal to or more than two angles, outputs equal to or more than two images, and calculates distance to each of the work pieces 13 based on the equal to or more than two images. The image capture apparatus 14 includes equal to or more than two cameras, and each camera includes a lens, a shutter, and an image sensor. The image capture apparatus 14 controls shutters in those cameras simultaneously and captures multiple images simultaneously at one image capture operation. The image sensor includes multiple photoelectric transducers and converts received light into an electric signal. In addition, the image capture apparatus 14 includes an A/D converter to convert the electric signal into image data as digital data. Subsequently, the image capture apparatus 14 calculates distance from the image capture apparatus 14 to each work 13 using the image data.

By using the image data and the distance data output by the image capture apparatus 14, the recognition apparatus 15 selects one work 13 among multiple work pieces 13 piled up randomly and measures the precise shape of the work 13. For that purpose, the recognition apparatus 15 exchanges information with the projecting apparatus 10 and the image capture apparatus 14.

It is possible that the projecting apparatus 10, the controller 11, the pickup apparatus 12, the image capture apparatus 14, and the recognition apparatus 15 are connected with each other via cables. Otherwise, it is possible that the projecting apparatus 10, the controller 11, the pickup apparatus 12, the image capture apparatus 14, and the recognition apparatus 15 are connected with each other via a network. The network can be wired. Otherwise, the network can be a wireless network such as Bluetooth and Wi-Fi etc.

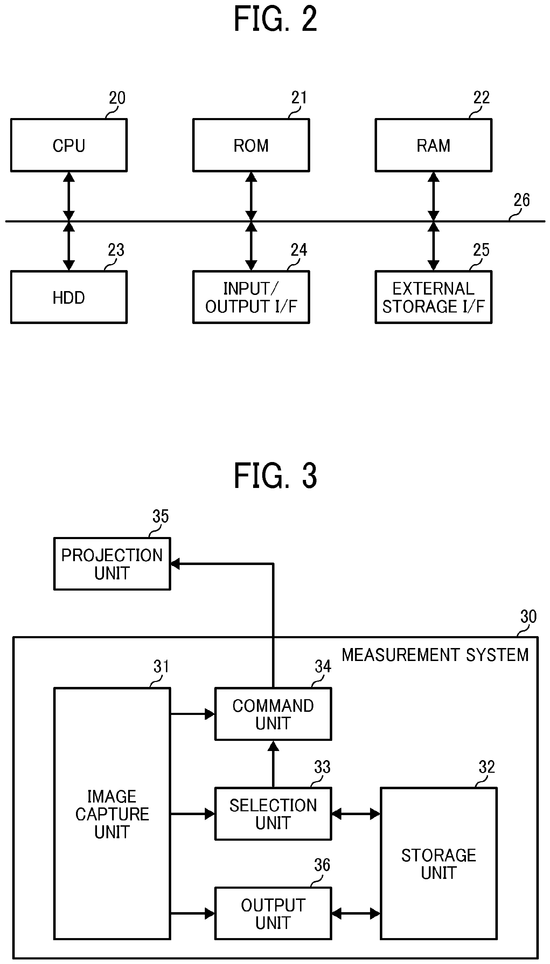

FIG. 2 is a diagram illustrating a hardware configuration of the controlling unit included in the measurement system in this embodiment. The hardware configuration of the camera part in the image capture apparatus 14 is described above. Therefore, a hardware configuration for calculating distance in the image capture apparatus 14 and performing recognition in the recognition apparatus 15 is described below. It is possible that the image capture apparatus 14 and the recognition apparatus 15 include the same hardware configuration except for the configuration of the camera part described above. Therefore, here, only the hardware configuration of the recognition apparatus 15 is described below. The recognition apparatus 15 includes a CPU 20, a ROM 21, a RAM 22, a HDD 23, an input/output I/F 24, and an external storage I/F 25.

The ROM 21 stores a boot program executed in the startup and firmware etc. The HDD 23 stores an operating system and programs that implements a process of selecting a work and a process of recognizing a position, shape, and orientation of the work etc. In this case, the HDD 23 is used as an example. However, it is possible to use a flash memory or a SSD etc. The CPU 20 controls the whole apparatus, reads and executes the programs stored in the ROM 21 and the HDD 23. The RAM 22 provides a work area for the CPU 20.

The input/output I/F 24 is connected to the projecting apparatus 10, the image capture apparatus 14, and the controller 11. The input/output I/F 24 outputs a command and data etc. from the CPU 20 to those apparatuses and accepts inputting data etc. from those apparatuses. Examples of the external storage I/F 25 are a CD-ROM drive and a SD card slot etc. and used in case of installing those programs described above. These units are connected to a bus 26, and these units can exchange information with each other via the bus 26.

The recognition apparatus 15 includes a communication I/F and can communicate with those apparatuses via the network. If desired, it is possible that the recognition apparatus 15 includes an input device to input information and a display unit to display current processing statuses and errors etc.

A function that the measurement system implements is described below with reference to FIG. 3. The function that the measurement system includes can be implemented by the two cameras in the image capture apparatus 14, the CPU 20, and the programs stored in the HDD 23 etc. described above The measurement system selects one work 13 among multiple work pieces 13 piled up randomly and measures the precise shape of the work 13. To implement the function, the measurement system 30 at least includes an image capture unit 31 as the image capture apparatus 14, a storage unit 32, a selection unit 33, and a command unit 34. It should be noted that the measurement system 30 can further include an output unit 36 that outputs the recognition result to the controller 11. In FIG. 3, the projecting unit 35 as the projecting apparatus 10 is not included in the measurement system. However, the measurement system can include the projecting unit 35.

After capturing the multiple work pieces 13 piled up randomly from equal to or more than two different angles, the image capture unit 31 acquires and outputs equal to or more than two images. The image capture unit 31 calculates and outputs distance from the image capture unit 31 to each of the work pieces 13. A specific calculation method of the distance is described later.

The storage unit 32 stores multiple shapes viewed from a predetermined direction changing the orientation of the work 13 as shape information. More specifically, multiple 2-D images of the work 13 captured changing angles are stored as the shape information. The selection unit 33 selects one work 13 among multiple work pieces 13 based on the equal to or more than two images output by the image capture unit 31 and the shape information stored in the storage unit 32. In this case, the selection unit 33 selects the work 13 easiest to pick up among multiple work pieces 13 piled up randomly. A specific process of selecting the work 13 is described later.

By using the distance information to the work 13 selected by the selection unit 33 calculated by the image capture unit 31, the command unit 34 instructs the projection unit 35 to emit a random pattern as a predetermined projection pattern focusing on the selected work 13. After receiving the instruction, the projection unit 35 emits the random pattern focusing on the selected work 13. The command unit 34 instructs the image capture unit 31 to capture the selected work 13 on which the random pattern is emitted by the projection unit 35.

After capturing the selected work 13 that the projection unit 35 emits the random pattern, the image capture unit 31 calculates distances to multiple points on the random pattern included in the acquired equal to or more than two images. As a result, it is possible to measure the precise shape of the selected work.

The output unit 36 outputs equal to or more than two images output by the image capture unit 31 and distances to multiple points, data on the position and orientation of the work 13 recognized from the shape information stored in the storage unit 32, and shape data of the work 13. Those data is used for controlling the pickup apparatus 12 using the controller 11.

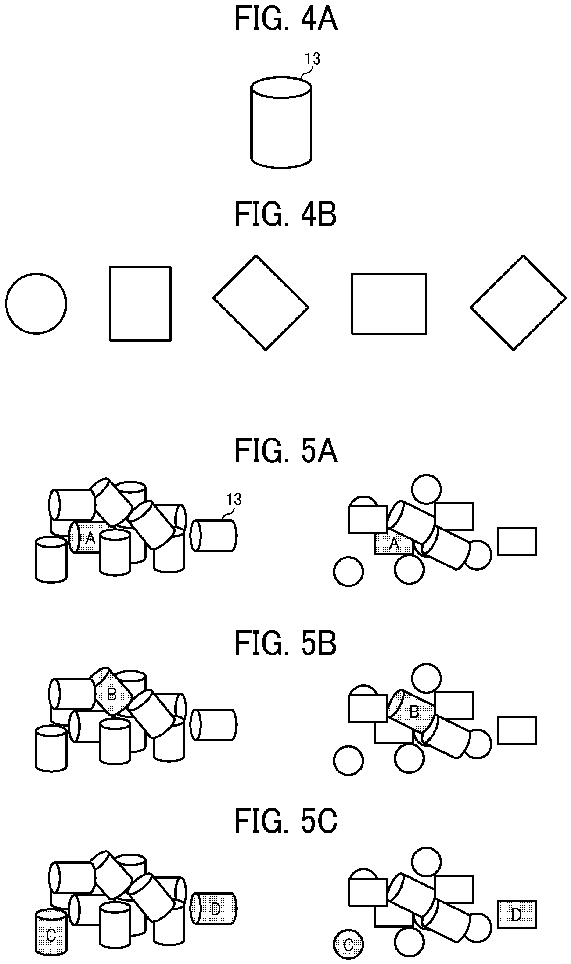

FIG. 4 is a diagram illustrating that shape information stored in the storage unit 32 that the measurement system 30 includes in this embodiment. Here, a cylinder-shape work 13 shown in FIG. 4A is taken as an example. Shape data acquired as a 2-D image in FIG. 4B by rotating the cylinder-shaped work 13 in various directions and capturing the work 13 by the image capture unit 31 is considered as the shape information stored in the storage unit 32. In FIG. 4B, five shapes, i.e., shape of a top part or bottom part of the cylinder, front shape, shape that tilts the front shape to 45 degrees, shape that tilts the front shape to 90 degrees, and shape that tilts the front shape to 135 degrees are illustrated.

After comparing the image output by the image capture unit 31 with the 2-D image as the shape information, the selection unit 33 recognizes the object as the work 13 if the image data corresponds at a predetermined level as the comparison result. Subsequently, the selection unit 33 selects the work 13 whose corresponding level is the largest as the work 13 easiest to be picked up among the recognized work pieces 13.

A process of selecting the work 13 is described below in detail with reference to FIG. 5. The left sides of FIGS. 5A to 5C illustrate multiple work pieces 13 piled up randomly viewed from an oblique direction rather upper from the front, and the right side of FIGS. 5A to 5C illustrate multiple work pieces 13 piled up randomly viewed from the right above side of the image capture unit 31. In FIG. 5A, another work is located on a work A, and the image capture unit 31 can capture only a part of the work A. As a result, in case of comparing with the second work from the right in FIG. 4B, only a part of the data corresponds, and the corresponding data level is small.

A work B in FIG. 5B is located at the highest position among the multiple work pieces piled up randomly. However, since the work B itself tilts largely, its shape is different from shapes of work pieces illustrated in FIG. 4B. Therefore, in case of comparing with the first work or the second work from the left in FIG. 4B, the corresponding data level is small.

While a work C and work D are located at the lowest position among the multiple work pieces piled up randomly, other work pieces are not located on them, and the work pieces C and D do not tilt itself. As a result, the image capture unit 31 can view the whole work pieces well, and in case of comparing with the first work from the left and the second work from the right in FIG. 4B, the corresponding data level is the largest. Consequently, the selection unit 33 selects the work pieces C and D as the work pieces easiest to be picked up.

In case of selecting two work pieces such as work pieces C and D, it is possible to pick up either one and pick up the other one subsequently. Whatever order of picking up is possible. For example, it is possible to pick up work pieces from left to right from the viewpoint of the image capture unit 31. The case described above is an example, and it is not limited to that.

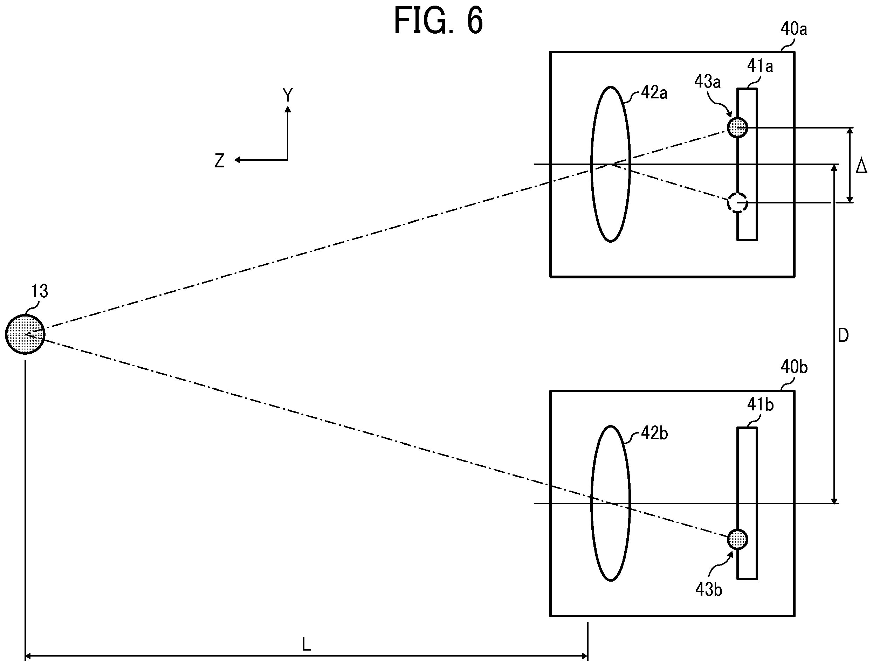

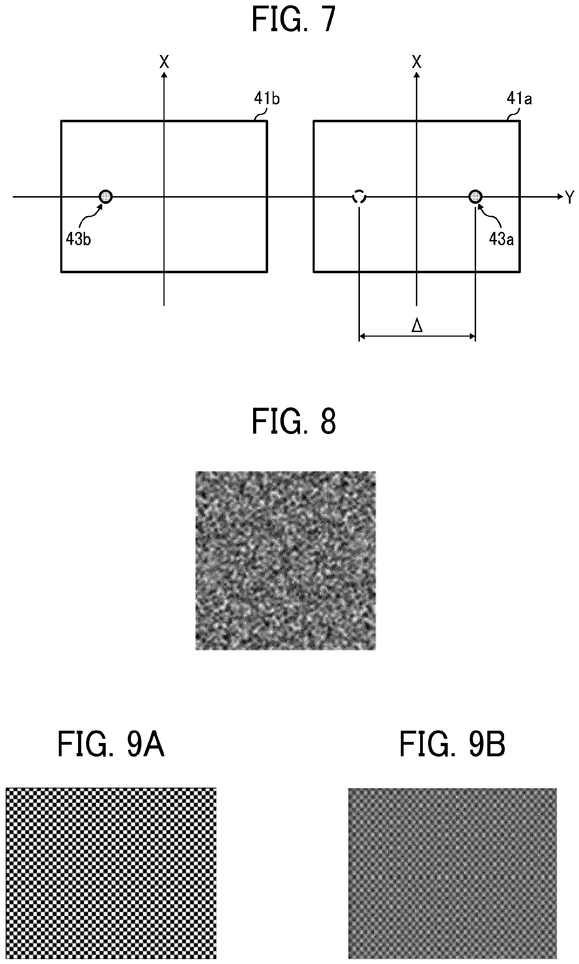

A process of calculating distance to the work 13 performed by the image capture unit 31 is described below with reference to FIGS. 6 and 7. For example, the

image capture unit 31 includes two cameras 40a and 40b and captures images simultaneously. By using disparity $\Delta$ generated between the acquired two images, the image capture unit 31 calculates distance L to the work 13 using triangulation technique. By combining a pair of image sensors 41a and 41b with a pair of lenses 42a and 42b, the image capture unit 31 comprises two cameras 40a and 40b.

**[0042]** In FIG. 6, light from the work 13 is captured by locating two cameras 40a and 40b that share the same optical system. Work images 43a and 43b acquired through the lenses 42a and 42b arrive at the image sensors 41a and 41b misaligning the same point on the target object by the disparity $\Delta$ as shown in FIGS. 6 and 7, and they are received by multiple photoelectric transducers.

**[0043]** Distance D between optical axes of the lenses 42a and 42b is called base length, and the distance can be calculated using Equation 1 below assuming the focal length of the lenses 42a and 42b as f and the L is far larger than f.

Equation 1

$$L = \frac{D \times f}{\Delta}$$

**[0044]** In Equation 1 described above, since the base length D and the focal length of the lenses 42a and 42b are known, it is possible to calculate the distance L to the work 13 by detecting the disparity $\Delta$ shown in FIGS. 6 and 7. Since width of pixels that comprises the image is constant, it is possible to calculate the disparity $\Delta$ using the number of pixels.

**[0045]** The random pattern is described below with reference to FIGS. 6 and 7. In measuring distance by the stereo camera used as the image capture unit 31, it is assumed there are textures in two images acquired simultaneously. Regarding the work 13 without texture, it is impossible that two images correspond and the disparity $\Delta$ is not detected. To cope with this issue, in order to measure the shape of the work 13 without texture, the fine texture called "random pattern" is projected on the work 13 using the projection apparatus 10.

**[0046]** The random pattern is not a periodic pattern that repeats same patterns at an equal interval but a nonperiodic pattern with different patterns and intervals as shown in FIG. 8. If it is possible to recognize the same position between two images in matching two images, the pattern is not limited to the pattern shown in FIG. 8 and any pattern can be used.

**[0047]** In case of picking up the work 13 precisely, it is desired to measure the shape of the work 13 more precisely. To measure the shape precisely, it is desired that the projection apparatus 10 emits the random pattern so that the random pattern focuses on the work 13 to be picked up. If the random pattern is emitted to focus on the work 13 and the work 13 is captured, an image of a clear random pattern as shown in FIG. 9A can be acquired.

**[0048]** Since it is focused on the work 13, it is possible to specify the corresponding pixel between the two images and calculate the precise distance to the point on the work 13 corresponding to the pixel. As a result, it is possible to measure the shape of the surface of the work 13 precisely using the distance calculated precisely.

**[0049]** By contrast, in case of not focusing on the work 13, blurred image of the random pattern as shown in FIG. 9B can be acquired. In case of the blurred image, it is impossible to specify the corresponding pixel between two images. In this case, it is impossible to calculate the precise distance to the point corresponding to the pixel and measure the shape of the surface of the work 13 precisely.

**[0050]** In the claimed invention, since the random pattern is emitted focusing on the work 13 to be picked up and captured, it is possible to measure the precise shape of the work 13. As the result of acquiring information on the precise shape, it is possible to acquire information on precise position and precise orientation.

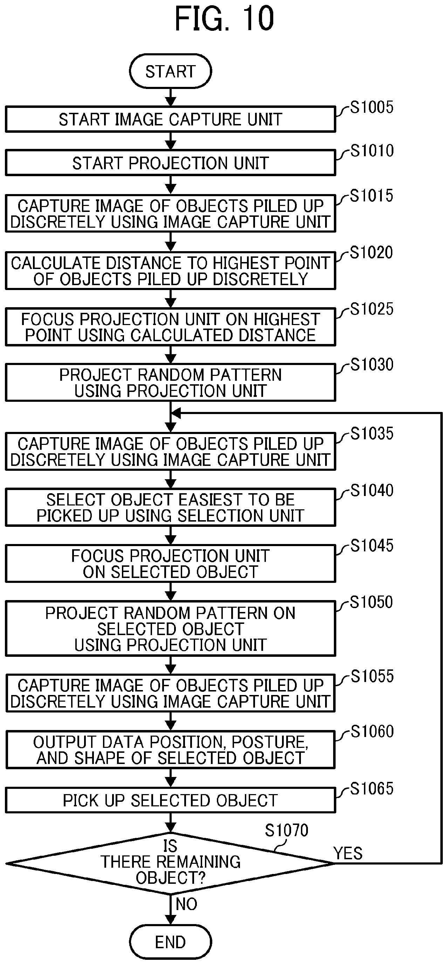

**[0051]** A process executed by a pickup system including the measurement system that the random pattern is emitted by the projection apparatus 10 focusing on the work to be picked up consistently to measure the precise shape of the work is described below in detail with reference to FIG. 10. After the process starts, the image capture unit 31 is started in S1005, and the projection unit 35 is started in S1010. Both units can be started by turning its power on. It is also possible that the projection unit 35 does not emit the random pattern but also illuminate multiple work pieces 13 only.

**[0052]** In S1015, multiple work pieces 13 piled up randomly is captured using the image capture unit 31. Two images can be acquired by this image capture. In S1020, based on the acquired two images, distance from the image capture unit 31 to the highest point (peak) of the multiple work pieces 13 piled up randomly is calculated. Since the image capture unit 31 captures images from just above the multiple work pieces 13 piled up randomly, the peak is the nearest point from the image capture unit 31. Since the peak becomes the edge part of the work 13, disparity can be acquired by checking whether or not the two images match well, and it is possible to calculate the distance described above using Equation 1 above.

**[0053]** In S1025, the projection unit 35 focuses on the peak using the calculated distance. The projection unit 35 includes a distance measurement sensor, and its projection distance is adjusted so that the distance measured by the distance measurement sensor becomes equal to the calculated distance. In S1030, the random pattern is emitted by the projection unit 35. In S1035, multiple work pieces 13 piled up randomly on which the random pattern is emitted is captured using the image capture unit 31.

**[0054]** In S1040, the selection unit 33 grabs the capture result and selects a work easiest to be picked up. In

S1045, the projection unit 35 focuses on the work selected by the selection unit 33. The capture result also includes distances to each of the work pieces 13, and the projection unit 35 is focused using the distance to the selected work 13. In S1050, the random pattern is emitted by the projection unit 35. Unlike in S1030, the random pattern is focused on the selected work 13.

In S1055, multiple work pieces 13 piled up randomly on which the random pattern is emitted is captured using the image capture unit 31. In S1060, data on precise shape, position, and orientation of the selected work 13 is generated using the capture result, and the data is output to the controller 11 as the recognition result. In S1065, the controller 11 controls the pickup apparatus 12 based on the data to pick up the selected work 13.

In S1070, it is determined whether or not there is a remaining work. If it is determined there are still remaining work pieces, the process returns to S1035, and the work pieces piled up randomly is captured by the image capture unit 31. By contrast, if there is no remaining work, the picking process ends.

In case of picking up the work 13 piled up randomly, it is usual that the work 13 located on the top of the pile is the easiest to be picked up. Therefore, in case of starting the process, it is possible to shorten time for focusing and time for picking up by focusing on the top work 13.

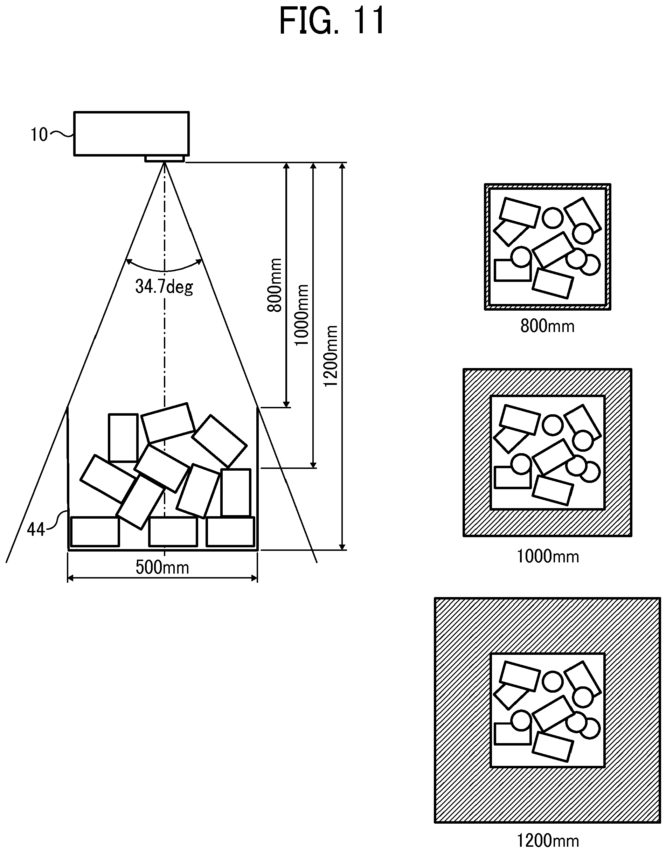

Usually, the work pieces 13 are piled up in a container 44 shown in FIG. 11. In case of illuminating the work pieces 13 in the container 44 by the projection unit 10, regarding the work 13 nearest to the projection unit 10, almost all beam of light that the projection unit 10 emits irradiates inside of the container 44 (at the position of 800 mm in FIG. 10). Regarding the work 13 located far from the projection unit 10 (e.g., at the position of 1200 mm in FIG. 11), light from the projection unit 10 spreads, and the light is also emitted outside of the container. Therefore, only a part of the beam of light irradiates inside of the container 44.

As a result, the work 13 far from the projection unit 10 is irradiated with less light intensity. If the light intensity is small, in case of capturing the work 13 using the image capture apparatus 14, a dark image is acquired. If the image is dark, it is difficult to match the two images, and it is impossible to acquire accurate disparity $\Delta$.

To cope with this issue, by changing exposure of the image capture apparatus 14 in accordance with the distance from the projection apparatus 10 to the work 13, it is possible that the image capture apparatus 14 consistently acquires images with constant brightness. More specifically, the image capture apparatus 14 can change exposure time to change exposure in accordance with the distance to the work 13.

For example, here, it is assumed that the dimensions of the container 44 are 500 mm (breadth), 500 mm (width), by 400 mm (height) and the distance from the projection apparatus 10 to the floor face is 1200 mm.

In this case, since the top of the container 44 is 800 mm away from the projection apparatus 10, it is possible to illuminate the whole container 44 (500 mm by 500 mm) if angle of view of the projection apparatus 10 is equal to or more than 34.7 degrees (=2 $\times$tan$^{-1}$(250/800). As shown in FIG. 11, if the work 13 is located 1200 mm away from the projection apparatus 10, the beam of light from the projection apparatus 10 illuminates an area whose dimensions are 750 mm (breadth) (=1200 Xtan(34.7/2) $\times$ 2) by 750 mm (width). Since an area multiplying the area of the container 44 (500 mm by 500 mm) by 2.25 is illuminated, the container 44 is illuminated with light intensity of 0.44 times compared to a position 800 mm away.

As the number of piled up work pieces 13 decreases by being picked up one by one, the remaining work pieces 13 gets further from the projection apparatus 10. As a result, the work pieces 13 are irradiated with less light intensity. However, by changing the exposure time in accordance with the distance and longing the exposure time, it is possible to prevent the capture image from being dark.

If the distance from the image capture apparatus 14 to the selected work 13 is calculated, it is possible to calculate the distance from the projection apparatus 10 to the selected work 13. Since the projection apparatus 10 and the image capture apparatus 14 are fixed, their positional relationship is kept constantly. As shown in FIG. 1, if the projection apparatus 10 is located at the same height of the image capture apparatus 14, it is considered that the distance from the image capture apparatus 14 to the work 13 is almost equal to the distance from the projection apparatus 10 to the work 13. Therefore, using the distance acquired by the image capture apparatus 14, it is possible to modify the exposure time of the image capture apparatus 14 in accordance with the distance, and it is possible to acquire bright images consistently. As a result, it is possible to match the two images and acquire the correct disparity $\Delta$.

In the above description, it is described that bright images can be acquired by longing the exposure time. However, it is possible to acquire bright images not only by longing the exposure time but also by enhancing brightness of the projection apparatus 10 to enhance the light intensity to be emitted. More specifically, the projection apparatus 10 can modify the light intensity that the projection apparatus 10 emits in accordance with the distance from the work 13 to the projection apparatus 10. Likewise the above description, it is possible that the distance from the work 13 to the projection apparatus 10 is almost equal to the distance from the image capture apparatus 14 to the work 13, and it is possible to use the distance acquired from the image capture apparatus 14. As a result, just like the case that longs the exposure time, it is possible to acquire bright images consistently. As a result, it is possible to match the two images and acquire the correct disparity $\Delta$.

In the above description, it is proposed that the height of the piled work pieces 13 changes as the work pieces 13 are picked up one by one and the exposure time of the image capture apparatus 14 and the brightness of the projection apparatus 10 are modified in accordance with the distance from the projection apparatus 10 to the selected work 13. Other than that, it is possible to modify the angle of view of the projection apparatus 10. The case that modifies the angle of view is described below.

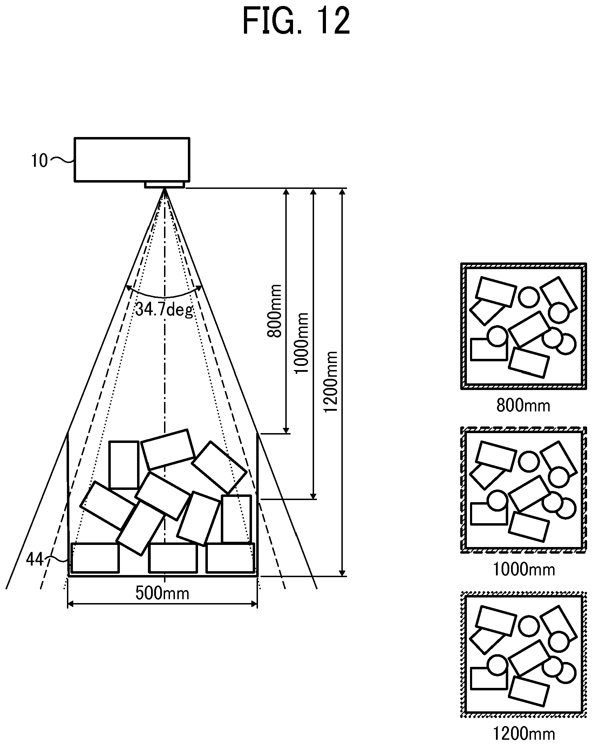

As shown in FIG. 12, if it is assumed that the distance from the projection apparatus 10 to the work 13 is 800 mm, the angle of view $\theta 1$ is equal to 34.7 degrees as described above. If the distance from the projection apparatus 10 to the work 13 becomes 1000 mm, the light intensity that irradiates the work 13 gets smaller since an area larger than the dimensions of the container 44 (500 mm by 500 mm) is irradiated with the light from the projection apparatus 10. It is desired to narrow the angle of view of the projection apparatus 10 to make up for the loss. More specifically, by changing the angle of view $\theta$ into $2 \times \tan^{-1} (250/1000) = 28.1$ degrees, it is possible to prevent the light from being emitted on the wider area outside of the container 44 and prevent the light intensity irradiated with the work 13 from decreasing even if the distance gets 1000 mm.

Furthermore, if the distance from the projection apparatus 10 to the work 13 becomes 1200 mm, the light intensity that irradiates the work 13 gets further smaller since an area larger than the dimensions of the container 44 is irradiated with the light from the projection apparatus 10. In this case, by changing the angle of view $\theta$ into $2 \times \tan^{-1} (250/1200) = 23.5$ degrees, it is possible to prevent the light from being emitted on the wider area outside of the container 44 and prevent the light intensity irradiated with the work 13 from decreasing.

As described above, by modifying the angle of view of the projection apparatus 10 in accordance with the distance to the work 13, it is possible to cut waste of light that does not illuminate the work 13, and it is possible to acquire bright images consistently using the image capture apparatus 14. As a result, it is possible to match the two images and acquire the correct disparity $\Delta$.

It is possible to modify the projecting angle of view by modifying power using a zooming function of a general projector etc. If brightness of the projector etc. is modified by zooming, it could be difficult to ensure the light intensity that illuminates the work 13 enough even if the light illuminates the container 44 only. To cope with this issue, it is preferable that the projection apparatus 10 is designed so that consistent brightness can be maintained in whole zooming area regardless of power.

Since it is possible to emit the random pattern focused on the selected work 13 to calculate the distances to the points on the work 13 precisely by capturing the random pattern, it is also possible to recognize the precise position of the work 13. In addition, by the calculated distance using along with the shape information, it is possible to recognize the precise orientation of the work 13 such as its direction and tilt. By providing these parameters as data on position and orientation along with the shape data to the controller 11, it is possible to smooth out the position and tilt to be recognizeed when the pickup apparatus 12 picks up the work 13. In addition, in attaching the grabbed work to another apparatus, it is possible to do that precisely at high yield.

In the above description, embodiments of the measurement system, the object pickup system, and the measurement method are described. However, the present invention is not limited to those embodiments. Therefore, embodiments can be modified within the scope apparent to those skilled in the arts. The present invention can include the object pickup method including its measurement method, and it is possible to provide a recording medium that stores a program for those methods.

Numerous additional modifications and variations are possible in light of the above teachings. It is therefore to be understood that, within the scope of the appended claims, the disclosure of this patent specification may be practiced otherwise than as specifically described herein.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

Each of the functions of the described embodiments may be implemented by one or more processing circuits. A processing circuit includes a programmed processor. A processing circuit also includes devices such as an application specific integrated circuit (ASIC) and conventional circuit components arranged to perform the recited functions.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. A measurement system (30) comprising:

   an image capture unit (14) adapted to capture images of multiple objects (13) from two or more angles that are different from each other, and calculate distances to the multiple objects (13) based on the acquired two or more images;
   a memory (32) adapted to store multiple shapes of the object (13) that are acquired when viewed from a predetermined viewpoint while changing orientation of the object (13), as shape information;
   a selection unit (33) adapted to select one object (13) among the multiple objects (13) based on the two or more images acquired by the image capture unit (14) and the shape information; and
   a command unit (34) adapted to instruct a projection unit (35) to emit a predetermined projection pattern focusing on the selected object (13) using the distance to the selected object (13) that is captured and calculated by the image capture unit (14),
   wherein the image capture unit (14) is adapted to capture two or more images of the selected object (13) on which the projection unit (35) emits the projection pattern, and calculate distances to multiple points on the projection pattern included in the acquired two or more images to measure a shape of the selected object (13).

2. The measurement system (30) according to claim 1, wherein the image capture unit (14) is adapted to capture images of multiple objects (13) focusing on the object (13) nearest to the image capture unit (14) and calculate the distance to the object (13) nearest to the image capture unit (14),
   the command unit (34) is adapted to instruct the projection unit (35) to emit the projection pattern focusing on the object (13) nearest to the image capture unit (14) using the distance calculated by the image capture unit (14), and
   the selection unit (33) is adapted to select one object (13) using the two or more images that is obtained by capturing the multiple objects (13) on which the projection pattern is emitted.

3. The measurement system (30) according to any one of claims 1 and 2, wherein the image capture unit (14) is adapted to modify exposure time in accordance with the calculated distance to the selected object (13).

4. The measurement system (30) according to any one of the preceding claims, wherein the projection unit (35) is adapted to modify brightness in accordance with the distance to the selected object (13) calculated by the image capture unit (14).

5. The measurement system (30) according to any one of the preceding claims, wherein the projection unit (35) is capable of zooming and modifying zooming power in accordance with the distance to the selected object (13) calculated by the image capture unit (14).

6. The measurement system (30) according to claim 5, wherein the projection unit (35) is adapted to maintain the brightness regardless of the zooming power.

7. The measurement system (30) according to any one of the preceding claims, further comprising an output unit (36) adapted to output the shape of the selected object (13) as shape data, wherein the output unit (36) is adapted to output the shape data along with distances to the multiple points calculated by the image capture unit (14) and data on a position and an orientation of the selected object (13) acquired from the shape information stored in the memory (32) to a pickup apparatus (12) that picks up the multiple objects (13) one by one.

8. The measurement system (30) according to any one of the preceding claims, wherein the selection unit (33 is adapted to compare the shapes of the objects (13) included in the two or more images acquired by the image capture unit (14) with the multiple shapes stored as the shape information in the memory (32) and select the object (13) that the pickup apparatus can pick up most easily based on the comparison result.

9. The measurement system (30) according to any one of the preceding claims, further comprising a projection unit (35) adapted to emit the projection pattern.

10. An object pickup system, comprising:

the measurement system (30) according to any one of claims 1 to 9; and
a pickup apparatus (12) adapted to pick up the multiple objects (13) one by one.

11. A method of measuring, comprising the steps of:

capturing images of multiple objects (13) from two or more angles that are different from each other;
calculating distances to the multiple objects (13) based on the acquired two or more images;
storing in a memory multiple shapes of the object (13) that are acquired when viewed from a predetermined viewpoint while changing orientation of the object (13) as shape information;
selecting one object (13) among the multiple objects (13) based on the two or more images and the shape information;
instructing a projection unit (35) to emit a predetermined projection pattern focusing on the selected object (13) using the distance to the selected object (13) that is captured and calculated;
capturing two or more images of the selected object (13) on which the projection unit (35) emits the projection pattern; and
calculating distances to multiple points on the projection pattern included in the two or more images to measure a shape of the selected object (13).

12. A carrier medium carrying computer readable code for controlling a computer to carry out the method of claim 11.

**Patentansprüche**

1. Messsystem (30), umfassend:

eine Bilderfassungseinheit (14), eingerichtet, Bilder von mehrfachen Objekten (13) von zwei oder mehreren Winkeln, die sich voneinander unterscheiden, einzufangen, und Abstände zu den mehrfachen Objekten (13) beruhend auf den gewonnenen zwei oder mehreren Bildern zu berechnen;
einen Speicher (32), eingerichtet, mehrfache Formen des Objekts (13), die gewonnen werden, wenn sie von einem festgelegten Blickwinkel aus betrachtet werden, während die Ausrichtung des Objekts (13) geändert wird, als Forminformation zu speichern;
eine Auswahleinheit (33), eingerichtet, ein Objekt (13) aus den mehrfachen Objekten (13) beruhend auf den zwei oder mehreren von der Bilderfassungseinheit (14) gewonnenen Bildern und der Forminformation auszuwählen; und
eine Befehlseinheit (34), eingerichtet, eine Projektionseinheit (35) anzuweisen, ein festgelegtes Projektionsmuster mit Fokussierung auf das ausgewählte Objekt (13) unter Verwendung des Abstands zum ausgewählten Objekt (13), das von der Bilderfassungseinheit (14) eingefangen und berechnet wird, abzugeben,
wobei die Bilderfassungseinheit (14) eingerichtet ist, zwei oder mehrere Bilder des ausgewählten Objekts (13) einzufangen, auf das die Projektionseinheit (35) das Projektionsmuster abgibt, und Abstände zu mehrfachen Punkten auf dem Projektionsmuster zu berechnen, das in den gewonnenen zwei oder mehreren Bildern umfasst ist, um eine Form des ausgewählten Objekts (13) zu berechnen.

2. Messsystem (30) nach Anspruch 1, wobei die Bilderfassungseinheit (14) eingerichtet ist, Bilder von mehrfachen Objekten (13) mit Fokussierung auf das Objekt (13) am nächsten zur Bilderfassungseinheit (14) einzufangen und den Abstand zum Objekt (13) am nächsten zur Bilderfassungseinheit (14) zu berechnen,
wobei die Befehlseinheit (34) eingerichtet ist, die Projektionseinheit (35) anzuweisen, das Projektionsmuster mit Fokussierung auf das Objekt (13) am nächsten zur Bilderfassungseinheit (14) unter Verwendung des von der Bilderfassungseinheit (14) berechneten Abstands abzugeben, und
wobei die Auswahleinheit (33) eingerichtet ist, ein Objekt (13) unter Verwendung der zwei oder mehreren Bilder auszuwählen, das durch das Einfangen der mehrfachen Objekte (13) auf die das Projektionsmuster abgegeben wird, erhalten wird.

3. Messsystem (30) nach einem der Ansprüche 1 und 2, wobei die Bilderfassungseinheit (14) eingerichtet ist, die Belichtungszeit in Übereinstimmung mit dem berechneten Abstand zum ausgewählten Objekt (13) zu modifizieren.

4. Messsystem (30) nach einem der vorstehenden Ansprüche, wobei die Projektionseinheit (35) eingerichtet ist, die Helligkeit in Übereinstimmung mit dem Abstand zum ausgewählten Objekt (13), der von der Bilderfassungseinheit (14) berechnet wurde, zu modifizieren.

5. Messsystem (30) nach einem der vorstehenden Ansprüche, wobei die Projektionseinheit (35) zoomen und die Zoomstärke in Übereinstimmung mit dem Abstand zum ausgewählten Objekt (13), der von der Bilderfassungseinheit (14) berechnet wurde, modifizieren kann.

6. Messsystem (30) nach Anspruch 5, wobei die Projektionseinheit (35) eingerichtet ist, die Helligkeit unabhängig von der Zoomstärke beizubehalten.

7. Messsystem (30) nach einem der vorstehenden Ansprüche, ferner umfassend eine Abgabeeinheit (36), eingerichtet, die Form des ausgewählten Objekts (13) als Formdaten abzugeben, wobei die Abgabeeinheit (36) eingerichtet ist, die Formdaten zusammen mit Abständen zu den mehrfachen von der Bilderfassungseinheit (14) berechneten Punkten und Daten zu einer Position und einer Ausrichtung des ausgewählten Objekts (13), die von der im Speicher (32) gespeicherten Forminformation gewonnen wurden, an eine Aufnahmevorrichtung (12) abzugeben, die die mehrfachen Objekte (13) nacheinander aufnimmt

8. Messsystem (30) nach einem der vorstehenden Ansprüche, wobei die Auswahleinheit (33) eingerichtet ist, die Formen der Objekte (13), die in den zwei oder mehreren durch die Bilderfassungseinheit (14) gewonnenen Bildern umfasst sind, mit den mehrfachen als Forminformation im Speicher (32) gespeicherten Formen zu vergleichen und das Objekt (13) auszuwählen, das die Aufnahmevorrichtung beruhend auf dem Vergleichsergebnis am einfachsten aufnehmen kann.

9. Messsystem (30) nach einem der vorstehenden Ansprüche, ferner umfassend eine Projektionseinheit (35), eingerichtet, das Projektionsmuster abzugeben.

10. Objekt-Aufnahmesystem, umfassend:

das Messsystem (30) nach einem der Ansprüche 1 bis 9 und
eine Aufnahmevorrichtung (12), eingerichtet, die mehrfachen Objekte (13) nacheinander aufzunehmen.

11. Verfahren des Messens, umfassend die folgenden Schritte:

Einfangen von Bildern von mehrfachen Objekten (13) von zwei oder mehreren Winkeln, die sich voneinander unterscheiden;
Berechnen von Abständen zu den mehrfachen Objekten (13) beruhend auf den gewonnenen zwei oder mehreren Bildern;
Speichern in einem Speicher von mehrfachen Formen des Objekts (13), die gewonnen werden, wenn sie von einem festgelegten Blickwinkel aus betrachtet werden, während die Ausrichtung des Objekts (13) als Forminformation geändert wird;
Auswählen eines Objekts (13) unter den mehrfachen Objekten (13) beruhend auf den zwei oder mehreren Bildern und der Forminformation;
Anweisen einer Projektionseinheit (35) ein festgelegtes Projektionsmuster mit Fokussierung auf das ausgewählte Objekt (13) unter Verwendung des Abstands zum ausgewählten Objekt (13), das eingefangen und berechnet wird, abzugeben;
Einfangen von zwei oder mehreren Bildern des ausgewählten Objekts (13), auf das die Projektionseinheit (35) das Projektionsmuster abgibt und
Berechnen von Abständen zu mehrfachen Punkten auf dem Projektionsmuster, das in den zwei oder mehreren Bildern umfasst ist, um eine Form des ausgewählten Objekts (13) zu messen.

12. Trägermedium, das einen computerlesbaren Code zum Steuern eines Computers zum Durchführen des Verfahrens nach Anspruch 11 trägt.

## Revendications

1. Système de mesure (30) comprenant :

une unité de capture d'image (14) conçue pour capturer des images de multiples objets (13) vus d'au moins deux angles qui sont différents l'un de l'autre, et pour calculer des distances jusqu'aux multiples objets (13) en fonction des au moins deux images acquises ;
une mémoire (32) conçue pour stocker de multiples formes de l'objet (13) qui sont acquises lorsqu'elles sont vues depuis un point de vue prédéterminé pendant le changement d'orientation de l'objet (13), en tant qu'informations de forme ;
une unité de sélection (33) conçue pour sélectionner un objet (13) parmi les multiples objets (13) en fonction des au moins deux images acquises par l'unité de capture d'image (14) et des informations de forme ; et

une unité de commande (34) conçue pour ordonner à une unité de projection (35) d'émettre un schéma de projection prédéterminé focalisé sur l'objet sélectionné (13) en utilisant la distance jusqu'à l'objet sélectionné (13) qui est capturée et calculée par l'unité de capture d'image (14),

l'unité de capture d'image (14) étant conçue pour capturer au moins deux images de l'objet sélectionné (13) sur lequel l'unité de projection (35) émet le schéma de projection, et pour calculer les distances jusqu'à de multiples points sur le schéma de projection compris dans les au moins deux images acquises pour mesurer une forme de l'objet sélectionné (13).

2. Système de mesure (30) selon la revendication 1, dans lequel l'unité de capture d'image (14) est conçue pour capturer des images de multiples objets (13) focalisé sur l'objet (13) le plus proche de l'unité de capture d'image (14), et pour calculer la distance jusqu'à l'objet (13) le plus proche de l'unité de capture d'image (14),

l'unité de commande (34) est conçue pour ordonner à l'unité de projection (35) d'émettre le schéma de projection focalisé sur l'objet (13) le plus proche de l'unité de capture d'image (14) au moyen de la distance calculée par l'unité de capture d'image (14), et l'unité de sélection (33) est conçue pour sélectionner un objet (13) au moyen des au moins deux images qui est obtenu par capture des multiples objets (13) sur lesquels le schéma de projection est émis.

3. Système de mesure (30) selon l'une quelconque des revendications 1 et 2, dans lequel l'unité de capture d'image (14) est conçue pour modifier le temps d'exposition conformément à la distance calculée jusqu'à l'objet sélectionné (13).

4. Système de mesure (30) selon l'une quelconque des revendications précédentes, dans lequel l'unité de projection (35) est conçue pour modifier la luminosité conformément à la distance jusqu'à l'objet sélectionné (13) calculée par l'unité de capture d'image (14).

5. Système de mesure (30) selon l'une quelconque des revendications précédentes, dans lequel l'unité de projection (35) est capable de zoomer et de modifier la puissance de zoomage conformément à la distance jusqu'à l'objet sélectionné (13) calculée par l'unité de capture d'image (14).

6. Système de mesure (30) selon la revendication 5, dans lequel l'unité de projection (35) est conçue pour maintenir la luminosité indépendamment de la puissance de zoomage.

7. Système de mesure (30) selon l'une quelconque des revendications précédentes, comprenant en outre une unité de sortie (36) conçue pour produire en sortie la forme de l'objet sélectionné (13) en tant que données de forme, l'unité de sortie (36) étant conçue pour produire en sortie les données de forme avec les distances jusqu'aux multiples points calculées par l'unité de capture d'image (14) et des données sur une position et une orientation de l'objet sélectionné (13) acquises à partir des informations de forme stockées dans la mémoire (32) vers un appareil de saisie (12) qui saisit les multiples objets (13) un par un.

8. Système de mesure (30) selon l'une quelconque des revendications précédentes, dans lequel l'unité de sélection (33) est conçue pour comparer les formes des objets (13) compris dans les au moins deux images acquises par l'unité de capture d'image (14) à de multiples formes stockées en tant qu'informations de forme dans la mémoire (32) et pour sélectionner l'objet (13) que l'appareil de saisie peut saisir le plus facilement en fonction du résultat de comparaison.

9. Système de mesure (30) selon l'une quelconque des revendications précédentes, comprenant en outre une unité de projection (35) conçue pour émettre le schéma de projection.

10. Système de saisie d'objet, comprenant :

le système de mesure (30) selon l'une quelconque des revendications 1 à 9 ; et
un appareil de saisie (12) conçu pour saisir les multiples objets (13) un par un.

11. Procédé de mesure, comprenant les étapes consistant à :

capturer des images de multiples objets (13) vus d'au moins deux angles qui sont différents l'un de l'autre ;
calculer des distances jusqu'aux multiples objets (13) en fonction des au moins deux images acquises ;
stocker dans une mémoire des multiples formes de l'objet (13) qui sont acquises lorsqu'elles sont vues depuis un point de vue prédéterminé pendant le changement d'orientation de l'objet (13) en tant qu'informations de forme ;
sélectionner un objet (13) parmi les multiples objets (13) en fonction des au moins deux images et des informations de forme ;
ordonner à une unité de projection (35) d'émettre un schéma de projection prédéterminé focalisé sur l'objet sélectionné (13) au moyen de la distance jusqu'à l'objet sélectionné (13) qui est capturée et calculée ;
capturer au moins deux images de l'objet sélectionné (13) sur lequel l'unité de projection (35) émet le schéma de projection ; et

calculer des distances jusqu'à de multiples points sur le schéma de projection compris dans les au moins deux images pour mesurer une forme de l'objet sélectionné (13).

12. Support de transmission portant un code lisible par ordinateur destiné à commander un ordinateur pour exécuter le procédé selon la revendication 11.

# FIG. 1

EP 2 957 397 B1

# FIG. 2

```
   20                    21                    22
┌──────────┐        ┌──────────┐        ┌──────────┐
│   CPU    │        │   ROM    │        │   RAM    │
└──────────┘        └──────────┘        └──────────┘
     ↕                   ↕                   ↕                26
─────────────────────────────────────────────────────────
     ↕                   ↕                   ↕
   23                    24                    25
┌──────────┐        ┌──────────┐        ┌──────────┐
│   HDD    │        │  INPUT/  │        │ EXTERNAL │
│          │        │OUTPUT I/F│        │STORAGE I/F│
└──────────┘        └──────────┘        └──────────┘
```

# FIG. 3

```
        35
┌──────────────┐
│  PROJECTION  │ ◄──────────────────────┐
│     UNIT     │                        │
└──────────────┘                        │
                                        │              30
┌───────────────────────────────────────────────────────────┐
│                            MEASUREMENT SYSTEM               │
│    31                 34                                    │
│  ┌──────────┐     ┌──────────┐                             │
│  │          │────►│ COMMAND  │                             │
│  │          │     │   UNIT   │                             │
│  │          │     └──────────┘                             │
│  │          │          ▲                                   │
│  │  IMAGE   │          │        33              32         │
│  │ CAPTURE  │     ┌──────────┐        ┌──────────┐        │
│  │   UNIT   │────►│SELECTION │◄──────►│          │        │
│  │          │     │   UNIT   │        │          │        │
│  │          │     └──────────┘        │ STORAGE  │        │
│  │          │          36             │   UNIT   │        │
│  │          │     ┌──────────┐        │          │        │
│  │          │────►│  OUTPUT  │◄──────►│          │        │
│  │          │     │   UNIT   │        │          │        │
│  └──────────┘     └──────────┘        └──────────┘        │
└───────────────────────────────────────────────────────────┘
```

15

# FIG. 4A

# FIG. 4B

# FIG. 5A

# FIG. 5B

# FIG. 5C

FIG. 6

# FIG. 7

# FIG. 8

# FIG. 9A

# FIG. 9B

# FIG. 10

START

START IMAGE CAPTURE UNIT ⌐S1005

START PROJECTION UNIT ⌐S1010

CAPTURE IMAGE OF OBJECTS PILED UP DISCRETELY USING IMAGE CAPTURE UNIT ⌐S1015

CALCULATE DISTANCE TO HIGHEST POINT OF OBJECTS PILED UP DISCRETELY ⌐S1020

FOCUS PROJECTION UNIT ON HIGHEST POINT USING CALCULATED DISTANCE ⌐S1025

PROJECT RANDOM PATTERN USING PROJECTION UNIT ⌐S1030

CAPTURE IMAGE OF OBJECTS PILED UP DISCRETELY USING IMAGE CAPTURE UNIT ⌐S1035

SELECT OBJECT EASIEST TO BE PICKED UP USING SELECTION UNIT ⌐S1040

FOCUS PROJECTION UNIT ON SELECTED OBJECT ⌐S1045

PROJECT RANDOM PATTERN ON SELECTED OBJECT USING PROJECTION UNIT ⌐S1050

CAPTURE IMAGE OF OBJECTS PILED UP DISCRETELY USING IMAGE CAPTURE UNIT ⌐S1055

OUTPUT DATA POSITION, POSTURE, AND SHAPE OF SELECTED OBJECT ⌐S1060

PICK UP SELECTED OBJECT ⌐S1065

IS THERE REMAINING OBJECT? S1070 — YES

NO

END

# FIG. 11

# FIG. 12

**EP 2 957 397 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001091232 A

- EP 15172776 A